# EUROPEAN PATENT APPLICATION

(11) **EP 4 667 406 A1**
(43) Date of publication of application: **24.12.2025**
(21) Application number: 24891757.7
(22) Date of filing: 12.11.2024
(51) Int. Cl.: B65H 75/22, B65H 75/10, H01M 4/04

(54) **CORE FOR WINDING ELECTRODE**

(30) Priority: 16.11.2023 KR 20230159440
(71) Applicant: LG Energy Solution, Ltd., Seoul 07335 (KR)
(72) Inventor: LEE, Jeong Eun, Daejeon 34122 (KR)
(74) Representative: Goddar, Heinz J.
(86) International application number: PCT/KR2024/017879
(87) International publication number: WO 2025/105811

(57) **Abstract**

Disclosed is a core for winding electrodes configured to allow an electrode to be wound therearound, the core including a ring-shaped first core having a first outer diameter, a ring-shaped second core having a second inner diameter greater than the first outer diameter, and a connection member connecting the first core and the second core to each other.

## Description

### [Technical Field]

This application claims the benefit of priority to Korean Patent Application No. 2023-0159440 filed on November 16, 2023, the disclosure of which is incorporated herein by reference in its entirety.

The present invention relates to a core for winding electrodes, and more particularly to a core for winding electrodes that can be mounted on slitters having different sizes.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

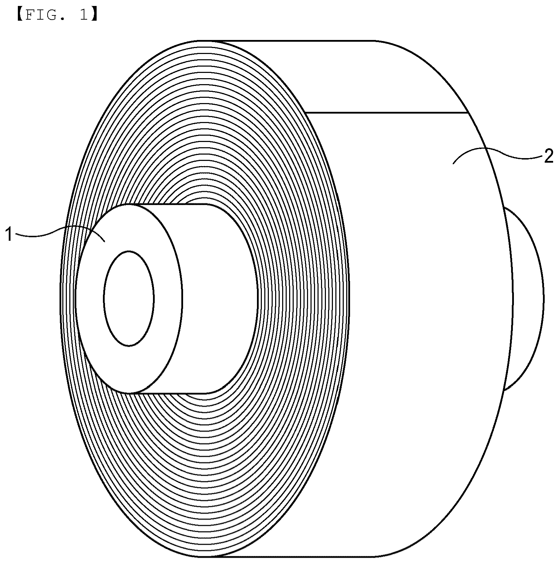

FIG. 1 is a view illustrating the state in which an electrode is wound around a conventional core.

Referring to FIG. 1, a core 1 configured in an approximately cylindrical shape having a through-hole formed in the center thereof is fastened to a rotatable winding shaft (not shown), and as the core 1 rotates, an electrode 2 is wound around an outer surface of the core 1.

That is, the diameter of the center through-hole of the core 1 must be substantially the same as the outer diameter of the winding shaft, and therefore a new core must be used when the diameter of the winding shaft is changed.

Meanwhile, manufacture of an electrode involves a so-called slitting process of cutting the electrode to fit the battery dimensions, and after the slitting process, a slitter core is required to wind the electrode again.

However, as described above, if the outer diameter of the rotating shaft is changed, the inner diameter of the slitter core must also be changed accordingly. Especially if the electrode is already wound around the core, it is very difficult to machine the electrode wound around the core without replacing the shaft.

### (Prior Art Document)

(Patent Document 1) Korean Patent Application Publication No. 10-2018-0028469

### [Disclosure]

### [Technical Problem]

The present invention has been made in view of the above problems, and it is an object of the present invention to provide a core for winding electrodes that can be mounted to a rotating shaft or slitter even if the diameter of the rotating shaft or slitter is different from the diameter of the core.

### [Technical Solution]

As a technical means for achieving the above object, a core for winding electrodes configured to allow an electrode to be wound therearound according to an embodiment of the present invention includes a ring-shaped first core (100) having a first outer diameter (D1), a ring-shaped second core (200) having a second inner diameter (D4) greater than the first outer diameter (D1), and a connection member (300) connecting the first core (100) and the second core (200) to each other.

Also, in the core for winding electrodes according to the embodiment of the present invention, the first core (100) may have a first hole (110) having a first inner diameter (D2) less than the first outer diameter (D1), and the second core (200) may have a second hole (210) having the second inner diameter (D4).

Also, in the core for winding electrodes according to the embodiment of the present invention, the first core (100) may be disposed in the second hole (210) so as to be provided inside the second core (200).

Also, in the core for winding electrodes according to the embodiment of the present invention, the first core (100) and the second core (200) are separably coupled to each other via the connection member (300).

Also, in the core for winding electrodes according to the embodiment of the present invention, the connection member (300) may include a first connection member (310) connecting one surface of the first core (100) and one surface of the second core (200) to each other and a second connection member (320) connecting the other surface of the first core (100) and the other surface of the second core (200) to each other.

Also, in the core for winding electrodes according to the embodiment of the present invention, the first connection member (310) and the second connection member (320) may not overlap the first hole (110).

Also, in the core for winding electrodes according to the embodiment of the present invention, the inner diameter of the first connection member (310) may be formed so as to correspond to the first inner diameter (D2), and the outer diameter of the first connection member (310) may be formed so as to correspond to the second outer diameter (D3).

Also, in the core for winding electrodes according to the embodiment of the present invention, the inner diameter of the second connection member (320) may be formed so as to correspond to the first inner diameter (D2), and the outer diameter of the second connection member (320) may be formed so as to correspond to the second outer diameter (D3).

Also, in the core for winding electrodes according to the embodiment of the present invention, a first fastening hole (120) may be formed in the one surface of the first core (100), a second fastening hole (220) may be formed in the one surface of the second core (200), and the first connection member (310) may have a third inner fastening hole (312a) formed at a position corresponding to the first fastening hole (120) and a third outer fastening hole (312b) formed at a position corresponding to the second fastening hole (220).

Also, in the core for winding electrodes according to the embodiment of the present invention, the first fastening hole (120) and the third inner fastening hole (312a) may be coupled to each other via a fastening unit (400), and the second fastening hole (220) and the third outer fastening hole (312b) may be coupled to each other via the fastening unit (400).

Also, in the core for winding electrodes according to the embodiment of the present invention, a first fastening hole (120) may be formed in the other surface of the first core (100), a second fastening hole (220) may be formed in the other surface of the second core (200), and the second connection member (320) may have a fourth inner fastening hole (322a) formed at a position corresponding to the first fastening hole (120) and a fourth outer fastening hole (322b) formed at a position corresponding to the second fastening hole (220).

Also, in the core for winding electrodes according to the embodiment of the present invention, the first fastening hole (120) and the fourth inner fastening hole (322a) may be coupled to each other via a fastening unit (400), and the second fastening hole (220) and the fourth outer fastening hole (322b) may be coupled to each other via the fastening unit (400).

### [Advantageous Effects]

As is apparent from the above description, in a core for winding electrodes according to the present invention, a first core and a second core having different inner and outer diameters are detachably connected to each other via a connection member, whereby the core for winding electrodes may be mounted to a plurality of shafts or slitters having different outer diameters.

Also, in the core for winding electrodes according to the present invention, an electrode wound around the second core may be mounted to a shaft or slitter using the first core, whereby it is not necessary to provide a separate shaft or slitter for the second core, and therefore it is possible to reduce the facility investment cost for electrode production.

### [Description of Drawings]

FIG. 1 is a view illustrating the state in which an electrode is wound around a conventional core.
FIG. 2 is a perspective view illustrating a core for winding electrodes according to an embodiment of the present invention.
FIG. 3 is an exploded perspective view illustrating the core for winding electrodes according to the embodiment of the present invention.
FIG. 4 is a sectional view illustrating a first core of the core for winding electrodes according to the embodiment of the present invention.
FIG. 5 is a sectional view illustrating a second core of the core for winding electrodes according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a core for winding electrodes according to the present invention will be described. The core for winding electrodes may be configured to allow an electrode to be wound therearound.

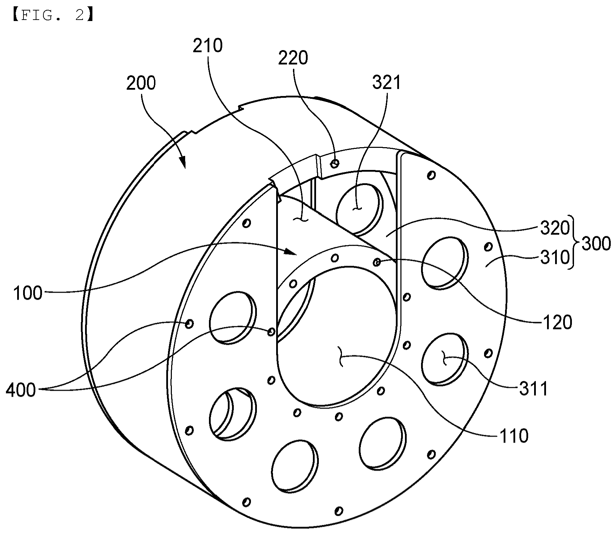

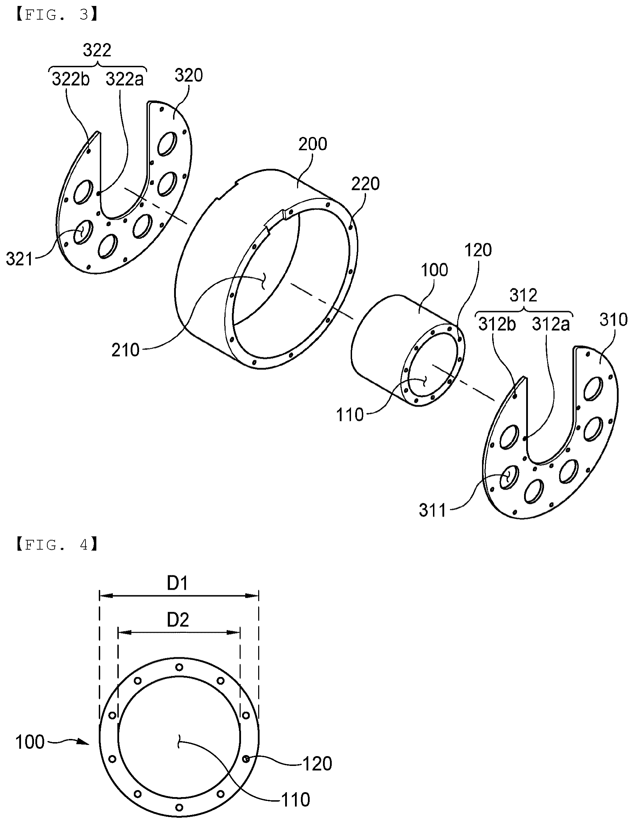

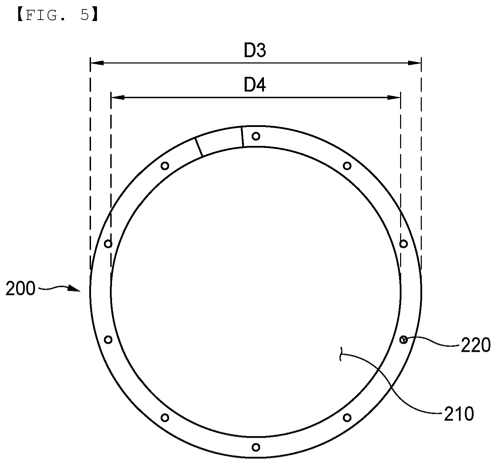

FIG. 2 is a perspective view illustrating a core for winding electrodes according to an embodiment of the present invention, and FIG. 3 is an exploded perspective view illustrating the core for winding electrodes according to the embodiment of the present invention. In addition, FIG. 4 is a sectional view illustrating a first core of the core for winding electrodes according to the embodiment of the present invention, and FIG. 5 is a sectional view illustrating a second core of the core for winding electrodes according to the embodiment of the present invention.

Referring to FIGs. 2 to 5, the core for winding electrodes according to the present invention includes a first core 100, a second core 200, a connection member 300, and a fastening unit 400.

The first core 100 is in the form of a ring having a first outer diameter D1, and may be formed so as to have a first hole 110 having a first inner diameter D2 less than the first outer diameter D1.

The second core 200 is in the form of a ring having a second inner diameter D4 greater than the first outer diameter D1 of the first core 100, and may be formed so as to have a second hole 210 having a second inner diameter D4.

Consequently, the first inner diameter D2 of the first core 100 is the smallest, followed by the first outer diameter D1, the second inner diameter D4 of the second core 200, and the second outer diameter D3.

For example, the first outer diameter D1 of the first core 100 may be 3 inches, and the second outer diameter D3 of the second core 200 may be 6 inches; however, the present invention is not necessarily limited thereto.

In addition, the first core 100 may be disposed in the second hole 210 so as to be provided inside the second core 200. For example, the first core 100 may be disposed such that the center of the second core 200 and the center of the first core 100 coincide with each other.

First fastening holes 120 may be formed in one surface and the other surface of the first core 100, wherein a female thread may be formed in each of the first fastening holes 120.

In addition, second fastening holes 220 may be formed in one surface and the other surface of the second core 200, wherein a female thread may be formed in each of the second fastening holes 220.

Next, the connection member 300 is configured to connect the first core 100 and the second core 200 to each other, and may include a first connection member 310 and a second connection member 320.

First, the first connection member 310 connects one surface of the first core 100 and one surface of the second core 200 to each other, and is a circular plate which is cut in a roughly "U"-shape including a central part, in which a plurality of third holes 311 is formed, and which has a certain thickness.

Here, the third holes 311 may be configured to allow a worker to grip the first connection member 310 by hand therethrough such that the first connection member can be easily disposed on one surface of the first core 100 and one surface of the second core 200.

In addition, the first connection member 310 may have a third inner fastening hole 312a formed at the position corresponding to the first fastening hole 120 and a third outer fastening hole 312b formed at the position corresponding to the second fastening hole 220.

The first fastening hole 120 and the third inner fastening hole 312a may be coupled to each other via the fastening unit 400, and the second fastening hole 220 and the third outer fastening hole 312b may also be coupled to each other via the fastening unit 400.

Since the first connection member 310 is cut in a roughly "U" shape including the central part, the number of the third inner fastening hole 312a and the number of the third outer fastening hole 312b may be reduced, whereby it is possible to reduce the time required for connection between the first core 100 and the second core 200 compared to when the first connection member 310 is configured in the form of a disc. In addition, the "U"-shaped first connection member 310 may reliably connect the first core 100 and the second core 200 to each other.

In addition, for example, the fastening unit 400 may be configured as a screw unit having a male thread, and therefore the first fastening hole 120 and the third inner fastening hole 312a may be screwed to each other via the fastening unit 400, and the second fastening hole 220 and the third outer fastening hole 312b may be screwed to each other via the fastening unit 400.

In other words, the fastening unit 400 simultaneously extends through the third inner fastening hole 312a and the first fastening hole 120 and is coupled to the first fastening hole 120, whereby one surface of the first core 100 and the first connection member 310 are fixed to each other. In addition, the fastening unit 400 simultaneously extends through the third outer fastening hole 312b and the second fastening hole 220 and is coupled to the second fastening hole 220, whereby one surface of the second core 200 and the first connection member 310 are fixed to each other.

At this time, it is preferable for the first connection member 310 not to overlap the first hole 320.

More specifically, the inner diameter of a circle corresponding to the central part of the "U"-shaped cut portion of the first connection member 310 may be formed so as to correspond to the first inner diameter D2 of the first core 100, and the outer diameter of the first connection member 310 may be formed so as to correspond to the second outer diameter D3 of the second core 200.

Here, that the inner diameter of the first connection member 310 corresponds to the first inner diameter D2 and that the outer diameter of the first connection member 310 corresponds to the second outer diameter D3 may be semantically equivalent to each other, but the diameters may include errors caused by operation or introduced during construction.

Meanwhile, the second connection member 320 connects the other surface of the first core 100 and the other surface of the second core 200 to each other, and is a circular plate which is cut in a roughly "U"-shape including a central part, in which a plurality of fourth holes 312 is formed, and which has a certain thickness.

Here, the fourth holes 312 may be configured to allow a worker to grip the second connection member 320 by hand therethrough such that the second connection member can be easily disposed on the other surface of the first core 100 and the other surface of the second core 200.

In addition, the second connection member 320 may have a fourth inner fastening hole 322a formed at the position corresponding to the first fastening hole 120 and a fourth outer fastening hole 322b formed at the position corresponding to the second fastening hole 220.

The first fastening hole 120 and the fourth inner fastening hole 322a may be coupled to each other via the fastening unit 400, and the second fastening hole 220 and the fourth outer fastening hole 322b may also be coupled to each other via the fastening unit 400.

Since the second connection member 320 is cut in a roughly "U" shape including the central part, the number of the fourth inner fastening hole 322a and the number of the fourth outer fastening hole 322b may be reduced, whereby it is possible to reduce the time required for connection between the first core 100 and the second core 200 compared to when the second connection member 320 is configured in the form of a disc. In addition, the "U"-shaped second connection member 320 may reliably connect the first core 100 and the second core 200 to each other.

In addition, for example, the fastening unit 400 may be configured as a screw unit having a male thread, and therefore the first fastening hole 120 and the fourth inner fastening hole 322a may be screwed to each other via the fastening unit 400, and the second fastening hole 220 and the fourth outer fastening hole 322b may be screwed to each other via the fastening unit 400.

In other words, the fastening unit 400 simultaneously extends through the fourth inner fastening hole 322a and the first fastening hole 120 and is coupled to the first fastening hole 120, whereby the other surface of the first core 100 and the second connection member 320 are fixed to each other. In addition, the fastening unit 400 simultaneously extends through the fourth outer fastening hole 322b and the second fastening hole 220 and is coupled to the second fastening hole 220, whereby the other surface of the second core 200 and the second connection member 320 are fixed to each other.

At this time, it is preferable for the second connection member 320 not to overlap the first hole 320.

More specifically, the inner diameter of a circle corresponding to the central part of the "U"-shaped cut portion of the second connection member 320 may be formed so as to correspond to the first inner diameter D2 of the first core 100, and the outer diameter of the second connection member 320 may be formed so as to correspond to the second outer diameter D3 of the second core 200.

Here, that the inner diameter of the second connection member 320 corresponds to the first inner diameter D2 and that the outer diameter of the second connection member 320 corresponds to the second outer diameter D3 may be semantically equivalent to each other, but the diameters may include errors caused by operation or introduced during construction.

Since the core for winding electrodes according to the embodiment of the present invention includes the connection member 300 that connects the first core 100 and the second core 200 to each other, an electrode wound around the second core 200 may be mounted to a slitter that uses only the first core 100. For example, the core for winding electrodes may be mounted to a bobbin of the slitter.

In addition, since the first core 100 and the second core 200 are separately coupled to each other via the connection member 300 and the fastening member 400, the first core 100 and the second core 200 may be independently used.

For example, as coupling between the first core 100 and the second core 200 and the connection member 300 is released by removing the fastening unit 400, the first core 100 and the second core 200 may be separated from each other.

Consequently, the first core 100 may be mounted to a slitter or shaft having a size corresponding to the first inner diameter D2 such that an electrode is wound therearound, and the second core 200 may also be mounted to a slitter or shaft having a size corresponding to the second inner diameter D4 such that an electrode is wound therearound.

Meanwhile, each of the first core 100, the second core 200, and the connection member 320 may be made of aluminum; however, the present invention is not limited thereto, and other metals may be used.

In addition, the electrode wound around the core may be a positive electrode or a negative electrode. The positive electrode includes a positive electrode current collector and a positive electrode active material applied to an upper surface and/or a lower surface of the positive electrode current collector to constitute a coated portion. The positive electrode active material may be mixed with a conductive agent and a binder, and a filler may further be added as needed.

In addition, the negative electrode includes a negative electrode current collector and a negative electrode active material applied to an upper surface and/or a lower surface of the negative electrode current collector to constitute a coated portion. The negative electrode active material may be mixed with a conductive agent and a binder, and a filler is further added as needed.

The positive electrode and the negative electrode are known, and therefore a detailed description thereof will be omitted.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: First core
110: First hole
120: First fastening hole
200: Second core
210: Second hole
220: Second fastening hole
300: Connection member
310: First connection member
311: Third hole
312: Third fastening hole
312a: Third inner fastening hole 312b: Third outer fastening hole
320: Second connection member
321: Fourth hole
322: Fourth fastening hole
322a: Fourth inner fastening hole 322b: Fourth outer fastening hole
400: Fastening unit
D1: First outer diameter
D2: First inner diameter
D3: Second outer diameter
D4: Second inner diameter

## Claims

1. A core for winding electrodes, the core configured to allow an electrode to be wound therearound, the core comprising:
a ring-shaped first core having a first outer diameter;
a ring-shaped second core having a second inner diameter greater than the first outer diameter; and
a connection member connecting the first core and the second core to each other.

2. The core according to claim 1, wherein the first core has a first hole having a first inner diameter less than the first outer diameter, and
the second core has a second hole having the second inner diameter.

3. The core according to claim 2, wherein the first core is disposed in the second hole so as to be disposed inside the second core.

4. The core according to claim 1, wherein the first core and the second core are separably coupled to each other via the connection member.

5. The core according to claim 2, wherein the connection member comprises:
a first connection member connecting one surface of the first core and one surface of the second core to each other; and
a second connection member connecting the other surface of the first core and the other surface of the second core to each other.

6. The core according to claim 5, wherein the first connection member and the second connection member do not overlap the first hole.

7. The core according to claim 6, wherein an inner diameter of the first connection member is formed so as to correspond to the first inner diameter, and an outer diameter of the first connection member is formed so as to correspond to the second outer diameter.

8. The core according to claim 6, wherein
an inner diameter of the second connection member is formed so as to correspond to the first inner diameter, and
an outer diameter of the second connection member is formed so as to correspond to the second outer diameter.

9. The core according to claim 5, wherein
a first fastening hole is formed in the one surface of the first core,
a second fastening hole is formed in the one surface of the second core, and
the first connection member has a third inner fastening hole formed at a position corresponding to the first fastening hole and a third outer fastening hole formed at a position corresponding to the second fastening hole.

10. The core according to claim 9, wherein
the first fastening hole and the third inner fastening hole are coupled to each other via a fastening unit, and
the second fastening hole and the third outer fastening hole are coupled to each other via the fastening unit.

11. The core according to claim 5, wherein
a first fastening hole is formed in the other surface of the first core,
a second fastening hole is formed in the other surface of the second core, and
the second connection member has a fourth inner fastening hole formed at a position corresponding to the first fastening hole and a fourth outer fastening hole formed at a position corresponding to the second fastening hole.

12. The core according to claim 11, wherein
the first fastening hole and the fourth inner fastening hole are coupled to each other via a fastening unit, and
the second fastening hole and the fourth outer fastening hole are coupled to each other via the fastening unit.
